# EUROPEAN PATENT APPLICATION

(11) **EP 0 605 157 A2**
(43) Date of publication of application: **06.07.1994**
(21) Application number: 93310212.1
(22) Date of filing: 17.12.1993
(51) Int. Cl.: C08L 67/00, C08L 69/00

(54) **Resin compositions**

(30) Priority: 28.12.1992 JP 359735/92
(71) Applicant: GE PLASTICS JAPAN LIMITED, Chuo-Ku, Tokyo (JP)
(72) Inventor: Ishiwa, Kenichi, Oyama City, Tohigi Prefecture (JP)
(74) Representative: Pratt, Richard Wilson

(57) **Abstract**

Resin compositions containing thermotropic liquid-crystal polyester and polycarbonate, which do not undergo delamination and which have excellent mechanical strength, comprise
(A) 99-1 parts by weight of a thermotropic liquid-crystal polyester, and
(B) 1-99 parts by weight of a polycarbonate obtained by the melt polymerization of an aromatic dihydroxy compound and a carbonic acid diester having an equivalence ratio (I)/(II) between phenolic end groups (I) and non-phenolic end groups (II) of at least 1/19 or more.

## Description

This invention relates to resin compositions containing polyester and polycarbonate, and more particular to such resin compositions which do not undergo delamination and which have excellent mechanical strength.

Thermotropic liquid-crystal polyesters are known. These have rigid molecular skeletons and exhibit anisotropy in a molten state. The rigid molecules readily orient on account of the shear stress when this is molded. In molded parts that have been cooled, because this orientation remains intact, the molding forms a self-reinforced structure that has a high strength and high elasticity, and also has an excellent heat resistance, dimensional stability and resistance to chemicals. Moreover, the shear rate dependence of the melt viscosity is high, and this exhibits a low melt viscosity in the high-shear region. Japanese Published Unexamined Patent Application [Kokai] No. 56-115,357 (1981) describes an attempt to obtain excellent properties by combining a thermotropic liquid-crystal polyester with a polyester such as polycarbonate or polyethylene terephthalate. When a thermotropic liquid-crystal polyester is compounded with a polycarbonate resin or a polyester, the melt viscosity of the resin composition thus obtained decreases and the melt flowability increases, thereby giving a resin composition having an excellent rigidity.

However, compositions of thermotropic liquid-crystal polyester with polycarbonate or with polyester give rise to different interactions between the two depending on the melt kneading conditions, as a result of which undesirable effects arise. In other words, when melt kneading is carried out under conditions that involve strong interactions, the reinforcing effect that is a property of the liquid-crystal polyester is lost; moreover, when this is carried out under conditions that involve weak interactions, the adhesive strength at the interface between both resins is inadequate, as a result of which delamination readily arises in processing methods where high shear is incurred, such as injection molding; nor is the mechanical strength adequate.

The object of this invention is to provide a resin composition that includes a thermotropic liquid-crystal polyester and a polycarbonate, which composition does not incur delamination and has an excellent mechanical strength.

This invention is a resin composition containing:
(A) 99-1 parts by weight of a thermotropic liquid-crystal polyester, and
(B) 1-99 parts by weight of a polycarbonate obtained by the melt polymerization of an aromatic dihydroxy compound and a carbonic acid diester having an equivalence ratio (I)/(II) between phenolic end groups (I) and non-phenolic end groups (II) of at least 1/19 or more.

The inventors discovered that by compounding a polycarbonate having a specific structure and obtained by the melt polymerization of an aromatic dihydroxy compound and a carbonic acid diester (i.e., a polycarbonate having the above-indicated equivalence ratio of end groups) in a thermotropic liquid-crystal polyester, the compatibility of the thermotropic liquid-crystal polyester and polycarbonate can be greatly improved. This led ultimately to the resin compositions of the present invention, which combine the reinforcing effects of the thermotropic liquid-crystal polyester with the excellent properties of the polycarbonate without undergoing delamination.

The polycarbonate serving as component (B) used in this invention is obtained by the melt polymerization of an aromatic dihydroxy compound and a carbonic acid diester. The equivalence ratio (I)/(II) of the phenolic end groups (I) and the non-phenolic end groups (II) thereof is at least 1.19, preferably at least 1.10, and most preferably at least 1.5. When this ratio is less than 1.19, the compatibility with the thermotropic liquid-crystal polyester does not improve, delamination arises, and the mechanical strength decreases, all of which are undesirable.

The above-mentioned phenolic end groups (I) preferably have the following formula 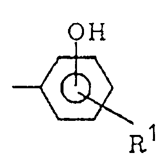
and the non-phenolic end groups (II) preferably have the following formula 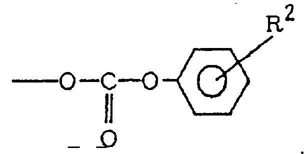
Here, R¹ and R² each independently represent hydrogen atoms, or straightchain or branched alkyl groups with no more than 20 carbons, which groups are either unsubstituted or are substituted with halogen atoms, these preferably being fluorine, chlorine or bromine.

Adjustment in the equivalence ratio of the end groups on the above-described polycarbonate can readily be effected by changing the molar ratio of the aromatic dihydroxy compounds and carbonic acid diester serving as the starting materials when polycarbonate is prepared by melt polymerization. For example, when bisphenol A is used as the aromatic dihydroxy compound and diphenyl carbonate is used as the carbonic acid diester, the end groups on the polycarbonate are phenolic residues from the bisphenol A and phenyl groups from the diphenyl carbonate. When the molar ratio of bisphenol A is increased, the equivalence ratio (I)/(II) of the phenolic end groups (I) and the non-phenolic end groups (II) in the polycarbonate formed becomes large.

The polycarbonate of this invention may be branched. This type of branched polycarbonate can be obtained as a thermoplastic random branched polycarbonate by reacting a polyfunctional aromatic compound with a diphenol and/or a carbonate precursor.

In the polycarbonates that have hitherto been in common use, and especially polycarbonates obtained by a method (especially an interfacial method) involving the reaction of an aromatic dihydroxy compound such as bisphenol A, with phosgene, it is not desirable for the equivalence ratio (I)/(II) between the phenolic end groups (I) and the non-phenolic end groups (II) to be less than 1/19.

The method for preparing the polycarbonates of this invention is known in itself. This is a method whereby a polycarbonate is synthesized by the transesterification of an aromatic dihydroxy compound and a carbonic acid diester in a molten state.

There is no particular restriction on the aromatic dihydroxy compounds, it being possible to use various known aromatic dihydroxy compounds. These include compounds represented by the formula 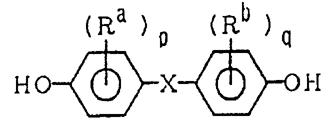
(where R^{a} and R^{b} are each independently halogens or monovalent hydrocarbon groups; X is -C(R^{c})(R^{d})-, -C(=R^{e})-, -O-, -S-, -SO- or -SO₂-; R^{c} and R^{d} being each independently hydrogens or monovalent hydrocarbon groups, R^{e} being a divalent hydrocarbon group, and p and q being each independently integers from 0 to 4). Examples that may be cited include bis(hydroxyaryl)alkanes such as bis(4-hydroxyphenyl)methane, 1,1-bis(4-hydroxyphenyl)ethane, 2,2-bis(4-hydroxyphenyl)propane, 2,2-bis(4-hydroxyphenyl)butane, 2,2-bis(4-hydroxyphenyl)octane, bis(4-hydroxyphenyl)phenylmethane, 2,2-bis(4-hydroxy- 1-methylphenyl)propane, 1,1-bis(4-hydroxy-t-butylphenyl)propane and 2,2-bis(4-hydroxy-3-bromophenyl)propane; bis(hydroxyaryl)cycloalkanes such as 1,1-bis(4-hydroxyphenyl)cyclopentane and 1,1-bis(4-hydroxyphenyl)cyclohexane; dihydroxyaryl ethers such as 4,4'-dihydroxydiphenyl ether and 4,4'-dihydroxy-3,3'-dimethylphenyl ether; dihydroxydiarylsulfides such as 4,4'-dihydroxydiphenylsulfide and 4,4'-dihydroxy-3,3'-dimethylphenylsulfide; dihydroxydiarylsulfoxides such as 4,4'-dihydroxydiphenylsulfoxide and 4,4'-dihydroxy-3,3'-dimethyldiphenylsulfoxide; and dihydroxydiarylsulfones such as 4,4'-dihydroxydiphenylsulfone and 4,4'-dihydroxy-3,3'-dimethyldiphenylsulfone. However, the possibilities are not limited to these alone. Of these, the use of 2,2-bis(4-hydroxyphenyl)propane is especially preferable. In addition to the above, compounds having the formula 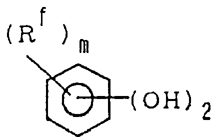
(where each R^{f} independently represents a hydrocarbon group having 1-10 carbons, a halide thereof, or a halogen; and m is an integer from 0 to 4) may be used as the aromatic dihydroxy compound. Examples that may be cited include substituted resorcinols such as resorcinol, 3-butylresorcinol, 3-t-butylresorcinol, 3-phenylresorcinol, 3-cumylresorcinol, 2,3,4,6-tetrafluororesorcinol and 2,3,4,6-tetrabromoresorcinol; catechol; hydroquinone and substituted hydroquinones such as 3-methylhydroquinone, 3-ethylhydroquinone, 3-propylhydroquinone, 3-butylhydroquinone, 3-t-butylhydroquinone, 3-phenylhydroquinone, 3-cumylhydroquinone, 2,3,5,6-tetramethylhydroquinone, 2,3,5,6-tetra-t-butylhydroquinone, 2,3,5,6-tetrafluorohydroquinone and 2,3,5,6-tetrabromohydroquinone. In addition, use can also be made of 2,2,2',2'-tetrahydro-3,3,3',3'-tetramethyl-1,1'-spirobi[1H-indene]7,7'-diol, which has the formula

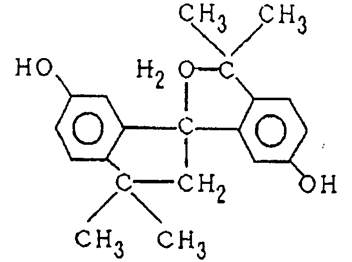

These aromatic dihydroxy compounds may be used alone or as combinations of two or more thereof.

There is no particular restriction on the carbonic acid diester. Some examples that may be cited include diphenyl carbonate, ditolyl carbonate, bis(chlorophenyl) carbonate, m-cresyl carbonate, dinaphthyl carbonate, bis(diphenyl) carbonate, diethyl carbonate, dimethyl carbonate, dibutyl carbonate. and dicyclohexyl carbonate, although the possibilities are not limited to these. The use of diphenyl carbonate is preferable.

These carbonic acid esters may be used alone, or as combinations of two or more thereof.

The carbonic acid diesters may include dicarboxylic acids or dicarboxylic acid esters. Examples of dicarboxylic acids and dicarboxylic acid esters that may be cited include aromatic dicarboxylic acids such as terephthalic acid, isophthalic acid, diphenyl terephthalate and diphenyl isophthalate; fatty dicarboxylic acids and esters thereof such as succinic acid, glutaric acid, adipic acid, pimelic acid, suberic acid, azelaic acid , sebacic acid, decanedioic acid, dodecanedioic acid, diphenyl sebacate, diphenyl decanedioate and diphenyl dodecanedioate; and alicyclic dicarboxylic acids and esters thereof such as cyclopropanedicarboxylic acid, 1,2-cyclobutanedicarboxylic acid, 1,3-cyclobutanedicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, diphenyl cyclopropanedicarboxylate, diphenyl 1,2-cyclobutanedicarboxylate, diphenyl 1,3-cyclobutanedicarboxylate, diphenyl 1,2 -cyclopentanedicarboxylate, diphenyl 1,3-cyclopentanedicarboxylate, diphenyl 1,2-cyclohexanedicarboxylate, diphenyl 1,3-cyclohexanedicarboxylate and diphenyl 1,4-cyclohexanedicarboxylate. These dicarboxylic acids or dicarboxylic acid esters may be used alone or as combinations of two or more thereof. The dicarboxylic acids or dicarboxylic acid esters are preferably included in the above carbonic acid diesters in an amount of no more than 50 mol%, and preferably no more than 30 mol%.

When preparing the polycarbonate, along with the aromatic dihydroxy compound and the carbonic acid diester, use can also be made of a polyfunctional compound having at least three functional groups per molecule. These polyfunctional compounds preferably include compounds having phenolic hydroxyl groups or carboxyl groups, and especially compounds containing three phenolic hydroxyl groups. Preferable examples that may be cited include 1,1,1-tris(4-hydroxyphenyl)ethane, 2,2',2''-tris(4-hydroxyphenyl)diisopropylbenzene, α-methyl-α,α',α'-tris(4-hydroxyphenyl)-1,4-diethylbenzene, α,α,α''-tris(4-hydroxyphenyl)-1,3,5-triisopropylbenzene, fluoroglycine, 4,6-dimethyl-2,4,6 tri(4-hydroxyphenyl)-heptane-2, 1,3,5-tri(4-hydroxyphenyl)benzene, 2,2-bis-[4,4-(4,4'-dihydroxyphenyl)cyclohexyl]propane, trimellitic acid, 1,3,5-benzenetricarboxylic acid and pyromellitic acid. The use of 1,1,1-tris(4-hydroxyphenyl)ethane and α,α',α''-tris(4-hydroxyphenyl)-1,3,5-triisopropyl-benzene is especially preferable. Polyfunctional compounds may be used in an amount of no more than 0.03 mole, preferably 0.001-0.02 mole, and most preferably 0.001-0.01 mole, per mole of the aromatic dihydroxy compound.

When preparing the polycarbonate, compounds obtained by introducing one or more end groups having the following formulas 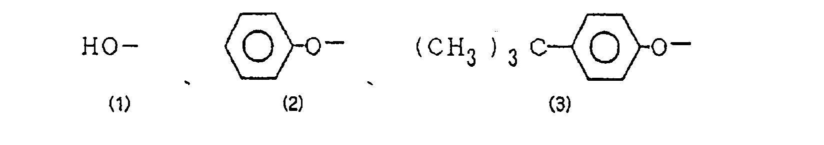 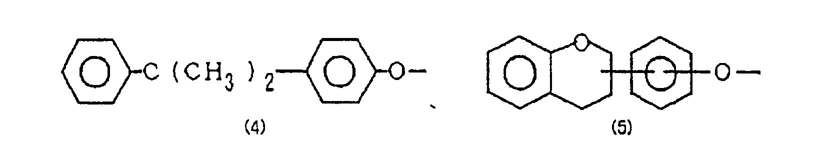
(where the aromatic ring or the chromanyl group may be substituted with a halogen or an alkyl group having 1-9 carbons) onto the polycarbonate that forms may also be used. Examples that may be cited of compounds in which the hydroxyl group represented by (1) can be introduced are diol compounds; examples of compounds in which the phenoxy group represented by (2) can be introduced are phenol and diphenyl carbonate; examples of compounds in which the p-t-butylphenoxy group represented by (3) can be introduced are p-t-butylphenol, p-t-butylphenylphenyl carbonate and p-t-butylphenyl carbonate; examples of compounds in which the p-cumylphenoxy group (p-phenylisopropylphenoxy group) represented by (4) can be introduced include p-cumylphenol, p-cumylphenylphenyl carbonate and p-cumylphenyl carbonate. Examples of chromanylphenoxy groups represented by (5) include chromanylphenoxy groups such as those having the formulas 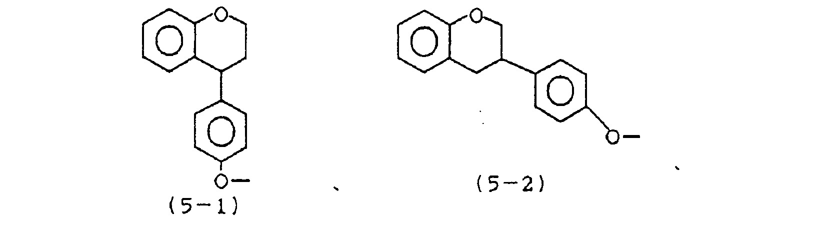 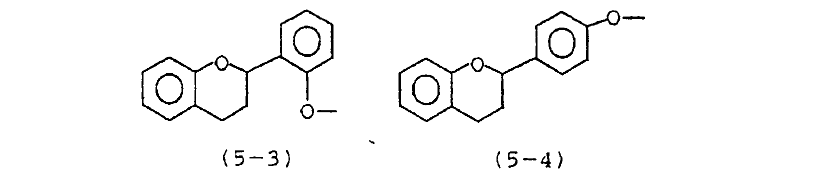
Examples that may be cited of compounds in which groups represented by (5-1) can be introduced include 2,2,4-trimethyl-4-(4-hydroxyphenyl)chroman, 2,2,4,6-tetramethyl-4-(3,5-dimethyl-4-hydroxyphenyl)chroman, 2,3,4-trimethyl-2-ethyl-4-(3-nonyl-4-hydroxyphenyl)-7-nonylchroman, 2,2,4-trimethyl-4-(3,5-diethyl-4-hydroxyphenyl)-6-ethylchroman, 2,2,4,6,8-pentamethy1-4-(3,5-dimethyl-4-hydroxyphenyl)chroman, 2,2,4-triethyl-3-methyl-4-(4-hydroxyphenyl)chroman, 2,2,4-trimethyl-4-(3-bromo-4-hydroxyphenyl)chroman, 2,2,4-trimethyl-4-(3-bromo-4-hydroxyphenyl)-6-bromochroman, 2,2,4-trimethyl-4-(3,5-dibromo-4-hydroxyphenyl)-6-bromochroman and 2,2,4-trimethyl-4-(3,5-dibromo-4-hydroxyphenyl)-6,8-dibromochroman; of these, the use of 2,2,4-trimethyl-4-(4-hydroxyphenyl)chroman is especially preferable. Examples that may be cited of compounds in which groups represented by (5-2) can be introduced include 2,2,3-trimethyl-3-(4-hydroxyphenyl)chroman, 2,2,3,6-tetramethyl-3-(3,5-dimethyl-4-hydroxyphenyl)chroman, 2,3,4-trimethyl-2-ethyl-3-(3-nonyl-4-hydroxyphenyl)-7-nonylchroman, 2,2,3-trimethyl-3-(3,5-diethyl-4-hydroxyphenyl)-6-ethylchroman, 2,2,3,6,8-pentamethyl-3-(3,5-dimethyl-4-hydroxyphenyl)chroman, 2,2,3-triethyl-3-methyl-3-(4-hydroxyphenyl)chroman, 2,2,3-trimethyl-3-(3-bromo-4-hydroxyphenyl)-6-bromochroman, 2,2,3-trimethyl-3-(3,5-dibromo-4-hydroxyphenyl)-6-bromochroman and 2,2,3-trimethyl-3-(3, 5-dibromo-4-hydroxyphenyl)-6, 8-dibromochroman; of these, the use of 2,2,3-trimethyl-3-(4-hydroxyphenyl)chroman is especially preferable. Examples that may be cited of compounds in which groups represented by (5-3) can be introduced include 2,4,4-trimethyl-2-(2-hydroxyphenyl)chroman, 2,4,4,6-tetramethyl-2-(3,5-dimethyl-2-hydroxyphenyl)chroman, 2,3,4-trimethyl-4-ethyl-2-(3,5-dimethyl-2-hydroxyphenyl)-7-nonylchroman, 2,4,4-trimethyl-2-(3,5-dimethyl-2-hydroxyphenyl)-6-ethylchroman, 2,4,4,6,8-pentamethyl-2-(3,5-dimethyl-2-hydroxyphenyl)-6-ethylchroman, 2,4,4-trimethyl-2-(3-bromo-2-hydroxyphenyl)chroman, 2,4,4-trimethyl-2-(3-bromo-2-hydroxyphenyl)-6-bromochroman, 2,4,4-trimethyl-2-(3,5-dibromo-2-hydroxyphenyl)-6-bromochroman and 2,4,4-trimethyl-2-(3,5-dibromo-2-hydroxyphenyl)-6,8-dibromochroman; of these, the use of 2,2,4-trimethyl-2-(2-hydroxyphenyl)-chroman is preferable. Examples that may be cited of compounds in which groups represented by (5-4) can be introduced include 2,4,4-trimethyl-2-(4-hydroxyphenyl)chroman, 2,4,4,6-tetramethyl-2-(3,5-dimethyl-4-hydroxyphenyl)chroman, 2,4,4-triethyl-2-(4-hydroxyphenyl)chroman, 2,3,4-trimethyl-4-ethyl-2-(3,5-dimethyl-4-hydroxyphenyl)-7-nonylchroman, 2,4,4-trimethyl-2-(3,5-diethyl-4-hydroxyphenyl)-6-ethylchroman, 2,4,4,6,8-pentamethyl-2-(3,5-dimethyl-4-hydroxyphenyl)-6-ethylchroman, 2,4,4-trimethyl-2-(3-bromo-4-hydroxyphenyl)chroman, 2,4,4-trimethyl-2-(3-bromo-4-hydroxyphenyl)-6-bromochroman, 2,4,4-trimethyl-2-(3,5-dibromo-4-hydroxyphenyl)-6-bromochroman and 2,4,4-trimethyl-2-(3,5-dibromo-4-hydroxyphenyl)-6,8-dibromochroman; of these, the use of 2,4,4-trimethyl-2-(4-hydroxyphenyl)chroman is preferable. In the above, the aromatic rings or aliphatic rings may be substituted with halogens or alkyls having 1-9 carbons. These compounds may be used alone, or may be used as combinations of two or more thereof.

It is preferable to use 1.00-1.30 moles, and in particular 1.01-1.20 moles, of carbonic acid diester per mole of aromatic dihydroxy compound, and react these in the presence of a catalyst.

Use may be made of the compounds proposed by this applicant in Japanese Unpublished Unexamined Patent Application [Tokugan] No. 2-85,218 (1990) as the catalyst. For example, it is preferable to use (a) the organic acid salts, inorganic acid salts, oxides, hydroxides, hydrides or alcoholates of alkali metals and alkaline earth metals. Specific examples of these compounds that may be cited include sodium hydroxide, potassium hydroxide, lithium hydroxide, sodium bicarbonate, potassium bicarbonate, lithium bicarbonate, sodium carbonate, potassium carbonate, lithium carbonate, sodium acetate, potassium acetate, lithium acetate, sodium stearate, potassium stearate, lithium stearate, sodium borohydroxide, lithium borohydroxide, sodium borophenylate, potassium benzoate, lithium benzoate, disodium phosphate, dipotassium phosphate, dilithium biphosphate, the disodium, dipotassium and dilithium salts of bisphenol A, the sodium , potassium, and lithium salts of phenol, calcium hydroxide, barium hydroxide, magnesium hydroxide, strontium hydroxide, calcium bicarbonate, barium bicarbonate, magnesium bicarbonate, strontium bicarbonate, calcium carbonate, barium carbonate, magnesium carbonate, strontium carbonate, calcium acetate, barium acetate, magnesium acetate, strontium acetate and strontium stearate, although the possibilities are not limited to these. These compounds may be used alone, or as combinations of two or more thereof. These alkali metal compounds and/or alkaline earth metal compounds are preferably used in an amount of 10⁻⁸ to 10⁻³ mole, preferably 10⁻⁷ to 10⁻⁶ mole, and most preferably 10⁻⁷ to 8x10⁻⁷ mole.

Along with the above alkali metal compound and/or alkaline earth metal compound, it is possible to use also (b) a basic compound as the catalyst. The basic compound may be a nitrogen compound, specific examples of which include ammonium hydroxides having alkyl, aryl, and alaryl groups, such as tetramethylammonium hydroxide, tetraethylammonium hydroxide, tetrabutylammonium hydroxide and trimethylbenzylammonium hydroxide; tertiary amines such as trimethylamine, triethylamine, dimethylbenzylamine and triphenylamine; secondary or primary amines having alkyl groups such as methyl groups and ethyl groups, or aryl groups such as phenyl groups or toluyl groups; ammonia; and tetramethylammonium borohydride, tetrabutyl ammonium borohydride, tetrabutyl ammonium tetraphenyl borate, and tetramethyl ammonium tetraphenyl borate, although the possibilities are not limited to these. Of these, ammonium hydroxides are especially preferable. These basic compounds may be used alone or as combinations of two or more thereof.

In this invention, by using as the catalyst a combination of:
(a) an alkali metal compound and/or an alkaline earth metal compounds, and
(b) a nitrogen-containing basic compound,

it is possible to obtain high-molecular-weight polycarbonates at a high polymerization activity.

Alternatively, it is possible to use as the catalyst a combination of:
(a) an alkali metal compound and/or an alkaline earth metal compound,
(b) a nitrogen-containing basic compound, and
(c) boric acid and/or a boric acid ester.

When a catalyst consisting of this combination is used, it is preferable that (a) the alkali metal compound and/or alkaline earth metal compound be used in the above-indicated amount, and (b) the nitrogen-containing basic compound be used in an amount of 10⁻⁶ to 10⁻¹ mole, and especially 10⁻⁵ to 10⁻² mole, per mole of the aromatic dihydroxy compound. The boric acid or boric acid ester (c) should preferably be a compound having the formula

B(OR³)_{n'}(OH)_{3-n'}

(where R³ is a hydrogen atom, an aliphatic hydrocarbon group, an alicyclic hydrocarbon group or an aromatic hydrocarbon group; and n' is an integer from 1 to 3). Examples that may be cited include boric acid, trimethyl borate, triethyl borate, tributyl borate, trihexyl borate, triheptyl borate, triphenyl borate, tritolyl borate and trinaphthyl borate. Of these, triphenyl borate is especially desirable. When these boric acid or boric acid esters (c) are used as catalysts together with (a) and (b) above, the amount should be 10⁻⁶ to 10⁻¹ mole, and preferably 10⁻⁵ to 10⁻² mole, per mole of the aromatic dihydroxy compound.

The temperature, pressure and other conditions at the time of melt polymerization may be set as desired, it being possible to use known conventional conditions. More specifically, the first-stage reaction is carried out at a normal pressure; a temperature of 80-250°C, preferably 100-230°C, and most preferably 120-190°C; and for a time of 0-5 hours, preferably 0-4 hours, and most preferably 0.25-3 hours. Next, while evacuating the reaction system, the reaction temperature is elevated and reaction between the aromatic dihydroxy compound and the carbonic acid diester is carried out, it being preferable for the reaction between the aromatic dihydroxy compound and the carbonic acid diester to be carried out ultimately under a vacuum of 0.05-5 mmHg and at a temperature of 240-320°C.

The reaction between the aromatic dihydroxy compound and the carbonic acid diester may be carried out continuously or as a batch-type process. The reaction apparatus used when carrying out the above reaction may be a tank-type, tube-type, or column-type apparatus.

The thermotropic liquid-crystal polyester serving as component (A) in the present invention can be selected from the group of polyesters that includes segments having the following structures:

-O-R-O-, -CO-R-CO-, and -O-R-CO-

where R in each case can be selected from the groups represented by the formulas

-CH₂-, -(CH₂)₂-, -(CH₂)₄-, -(CH₂)₆-

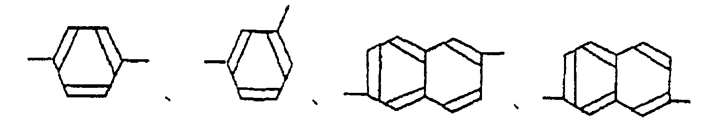

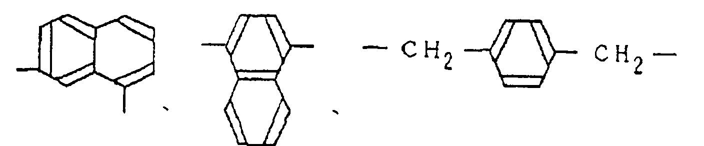

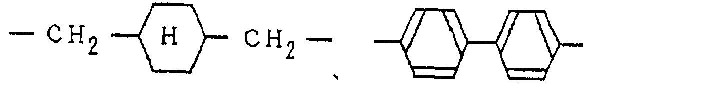

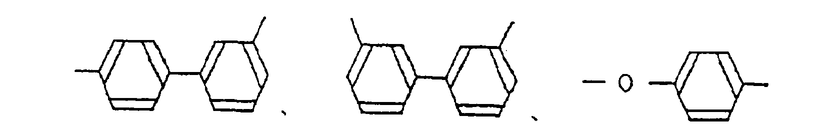

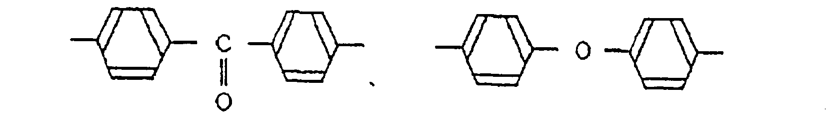

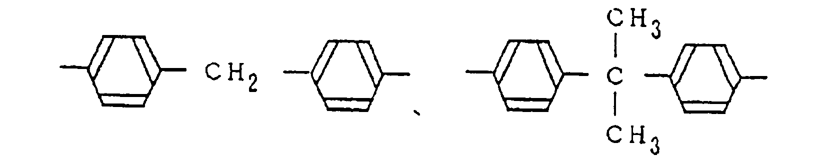

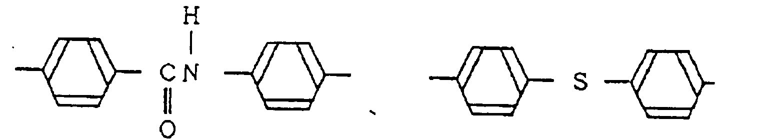

Also, the aromatic ring, aliphatic group and alicyclic group in R above may be substituted with a substituent selected from the group represented by the following formulas

-Br, -Cl, -COOH, -CONH₂, CH₃, -C(CH₃)₃

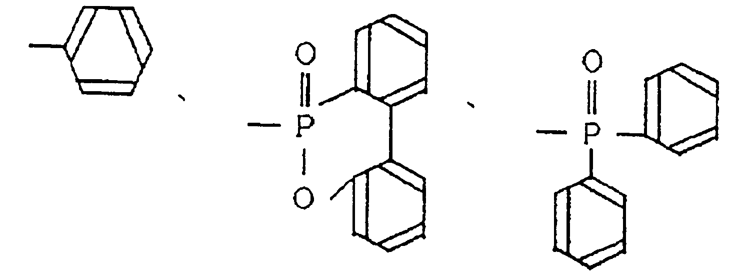

In the resin compositions of this invention, the mixing ratio between component (A) thermotropic liquid-crystal polyester and component (B) polycarbonate is 1-99 parts by weight of (B) per 99-1 parts by weight of (A), preferably 20-95 parts by weight of (B) per 80-5 parts by weight of (A), and most preferably 60-90 parts by weight of (B) per 40-10 parts by weight of (A). When component (A) is less than one part by weight and component (B) is more than 99 parts by weight, the outstanding rigidity and heat resistance of thermotropic liquid-crystal polyester cannot be obtained, which is undesirable. When component (A) exceeds 99 parts by weight and component (B) is less than 1 parts by weight, the flowability at the time of melting is not improved, which also is undesirable.

There is no particular restriction on the method for preparing the resin compositions of this invention, it being possible to use a conventional known method. The use of a melt kneading method is generally preferable. A small amount of solvent can also be added. The kneading apparatus may be, for example, an extruder, a Banbury mixer, a roller, a kneader or the like. These may be either batch-type or continuously operating devices.

In addition to the above mixtures, elastomers known to those conversant in the art and various types of additives can also be added, depending on the desired aim, provided this does not compromise the physical properties of the resin compositions according to this invention. Examples of the additives which may be added include pigments and dyes, reinforcing agents and fillers such as glass fibers, metal fibers, metal flakes and carbon fibers; heat stabilizers, antioxidants, ultraviolet light absorbers, light stabilizers, mold release agents, plasticizers, antistatic agents and fire retardants.

This invention shall now be illustrated more concretely by means of examples of the invention and comparative examples, although it shall be understood that the scope of the invention is in no way restricted by these examples.

### Examples

The following compounds were used in the examples of the invention and the comparative examples.

### Component (A): Thermotropic liquid-crystal polyester.

This is a thermotropic liquid-crystal polyester (abbreviated as LCP in Table 1) consisting of "Rodlan"* LC-500™ (Unitika, Ltd.), p-hydroxybenzoic acid, terephthalic acid and ethylene glycol.

### Component (B): Polycarbonate.

This is a polycarbonate (abbreviated as PC(30) in Table 1) having an intrinsic viscosity [η] (as measured at 25°C in methylene chloride) of 0.50 dl/g, and prepared by the melt polymerization of bisphenol A and diphenyl carbonate. Two types were used, one having an equivalence ratio (I)/(II) of phenolic end groups (I) to non-phenolic end groups (II) of 3/7 (abbreviated as PC(30) in Table 1) and the other having an equivalence ratio of 1/1 (abbreviated as PC(50) in Table 1).

### Comparative Ingredient: Lexan 141™ (General Electric)

This is a polycarbonate (abbreviated as PC(1) in Table 1) having an intrinsic viscosity [η] (as measured at 25°C in methylene chloride) of 0.51 dl/g, and prepared by polymerizing bisphenol A and phosgene, then blocking the end with a phenyl group. The equivalence ratio (I)/(II) of phenolic end groups (I) to non-phenolic end groups (II) is about 1/99.

### Application Examples 1-4, Comparative Examples 1-2

Using a twin-screw extruder having a barrel diameter of 30 mm, the various ingredients in the amounts indicated in Table 1 (parts by weight) were kneaded and extruded at a barrel temperature setting of 280°C and a rotational speed of 300 rpm, thereby giving pellets. The pellets thus formed were then fabricated into test pieces by means of an injection molding machine having a cylinder temperature setting of 280°C and a mold temperature setting of 80°C. These test pieces were furnished for tests on the various physical properties.

The physical properties cited in the examples of the invention and the comparative examples were evaluated by the following test methods.
Izod Impact Strength (NII): The 1/8-inch bar notched Izod impact strength was measured in accordance with ASTM D256.
Flexural Modulus (FM): ASTM D790.
Heat Distortion Temperature: ASTM (D648 (4.6 kg/cm² load)
Delamination: Evaluated visually with the unaided eye.

The results of these evaluations are presented in Table 1.

**Table 1**

| | Examples of invention | | | | Comparative Examples | |
|---|---|---|---|---|---|---|
| | 1 | 2 | 3 | 4 | 1 | 2 |
| LCP (parts by weight) | 20 | 20 | 40 | 40 | 20 | 40 |
| PC(30) (parts by weight) | 80 | -- | 60 | -- | -- | -- |
| PC(50) (parts by weight) | -- | 80 | -- | 60 | -- | -- |
| PC(1) (parts by weight) | -- | -- | -- | -- | 80 | 60 |
| NII (kg·cm/cm) | 25 | 28 | 18 | 20 | 8.0 | 2.8 |
| FM (x10³kg/cm²) | 36.2 | 37.1 | 39.2 | 40.0 | 33.0 | 35.7 |
| HDT (°C) | 141 | 141 | 140 | 140 | 145 | 148 |
| Delamination | no | no | no | no | yes | yes |

As can be seen in this table, in contrast with the comparative examples, the resin compositions of this invention do not undergo delamination, in addition to which they have an excellent mechanical strength.

## Claims

**(1)** A resin composition containing:
(A) 99-1 parts by weight of a thermotropic liquid-crystal polyester, and
(B) 1-99 parts by weight of a polycarbonate obtained by the melt polymerization of an aromatic dihydroxy compound and a carbonic acid diester having an equivalence ratio (I)/(II) between phenolic end groups (I) and non-phenolic end groups (II) of at least 1/19 or more.

**(2)** A resin composition according to Claim 1, whereby said phenolic end groups (I) have the formula 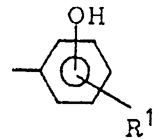 and said non-phenolic end groups (II) have the formula 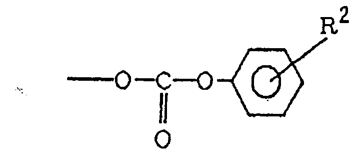 where R¹ and R² are each independently hydrogens, or linear or branched non-substituted or halogen-substituted alkyl groups with no more than 20 carbons .
